# EUROPEAN PATENT APPLICATION

(11) **EP 3 795 379 A1**
(43) Date of publication of application: **24.03.2021**
(21) Application number: 19802497.8
(22) Date of filing: 23.04.2019
(51) Int. Cl.: B60C 9/22, B60C 9/20

(54) **PNEUMATIC TIRE**

(30) Priority: 14.05.2018 JP 2018093002
(71) Applicant: Bridgestone Corporation, Chuo-Ku Tokyo 104-8340 (JP)
(72) Inventor: SONE, Naoyuki, Tokyo 104-8340 (JP)
(74) Representative: Oxley, Robin John George
(86) International application number: PCT/JP2019/017255
(87) International publication number: WO 2019/220887

(57) **Abstract**

A pneumatic tire including a pair of bead cores, a carcass that is formed spanning the pair of bead cores, a belt layer that is formed at a tire radial direction outside of the carcass by winding a covered cord, which is formed by covering a cord with a resin, in a spiral pattern, and a reinforcing member that is disposed at a tire radial direction outside of the belt layer so as to straddle a tire width direction end portion of the belt layer.

## Description

### Technical Field

The present disclosure relates to a pneumatic tire provided with a belt layer.

### Background Art

Japanese Patent Application Laid-Open (JP-A) No. H10-35220 describes a pneumatic radial tire in which a belt reinforcement layer formed from a thermoplastic resin is disposed at an edge portion of a belt layer. The belt reinforcement layer of this pneumatic radial tire is disposed such that the position of a width direction end portion of the belt reinforcement layer is aligned with the position of a width direction end portion of the belt layer. Moreover, the belt reinforcement layer is formed with a C-shaped cross-section profile and disposed so as to sandwich the belt layer from an outer circumferential side (tire radial direction outside) and an inner circumferential side (tire radial direction inside).

### SUMMARY OF INVENTION

### Technical Problem

In the pneumatic radial tire of JP-ANo. H10-35220, the edge portion (tire width direction outside end portion) of the belt layer is reinforced by the belt reinforcement layer. However, the belt reinforcement layer is not disposed further toward the tire width direction outside than the belt layer. A step change in rigidity therefore arises between the inside and outside of the tire width direction outside end of the belt layer. There is therefore a possibility that stress may become concentrated at the edge portion of the belt layer, affecting the durability of the tire.

In consideration of the above circumstances, an object of the present disclosure is to provide a pneumatic tire provided with a reinforcing member that reinforces a belt layer while avoiding a step change in rigidity.

### Solution to Problem

A pneumatic tire of a first aspect includes a pair of bead cores, a carcass that is formed spanning the pair of bead cores, a belt layer that is formed at a tire radial direction outside of the carcass by winding a covered cord, which is formed by covering a cord with a resin, in a spiral pattern around the tire circumferential direction, and a reinforcing member that is disposed at a tire radial direction outside of the belt layer so as to straddle a tire width direction end portion of the belt layer.

In the pneumatic tire according to the first aspect, the belt layer is formed by covering the cord with a resin. The belt layer that is formed using a resin has higher ring rigidity than would, for example, a belt layer formed using rubber instead of resin. This makes an annular surface of a tread less liable to undergo out-of-plane deformation along the tire circumferential direction or the tire width direction, thereby suppressing deformation of the pneumatic tire.

The belt layer that is formed using a resin also has higher in-plane (within the plane of the annular surface extending in the tire circumferential direction and the tire width direction) shear rigidity than would a belt layer formed using rubber. This makes the tread less liable to undergo in-plane deformation in response to shear force acting in the tire width direction, for example when turning during travel. This enables an intersecting belt layer to be omitted, thereby enabling a reduction in weight of the tire while raising steering stability during travel when internally pressurized.

Forming the belt layer by winding the covered cord around the tire circumferential direction in a spiral pattern raises the ring rigidity of the belt layer in comparison to cases in which a belt layer is formed by arranging plural covered cords alongside each other. This further suppresses out-of-plane deformation of the tread. This enables a reduction in weight of the pneumatic tire while securing hydrostatic strength. Moreover, since cord ends are not liable to be exposed at an end portion of the belt layer, as they would in the case of an intersecting belt layer, for example, separation and the like at the end portion of the belt layer is not liable to occur.

Moreover, the reinforcing member is disposed at the tire width direction end portion of the belt layer. This thereby enables deformation of the tire width direction end portion of the belt layer to be suppressed. The reinforcing member is disposed straddling the tire width direction end portion of the belt layer. Accordingly, the reinforcing member provides reinforcement at both the inside and outside (the tire width direction outside and inside) of the tire width direction end portion of the belt layer. The change in rigidity of the pneumatic tire on progression along the tire width direction is therefore smoother than it would be in cases in which, for example, the position of the tire width direction end of the reinforcing member were aligned with the position of the tire width direction end portion of the belt layer. A step change in rigidity is thus avoided.

In a pneumatic tire of a second aspect, the reinforcing member covers at least a tire circumferential direction end portion of the covered cord.

In the pneumatic tire of the second aspect, the reinforcing member covers the tire circumferential direction end portion of the covered cord, thus enabling efficient reinforcement of the belt layer.

When the tread and the belt layer are heated during tire manufacture or are subjected to pressure from the tire radial direction inside, the covered cord attempts to undergo linear expansion in the tire circumferential direction. When this occurs, adjacent locations of the covered cord in the tire width direction mutually restrain such expansion.

However, at the very outside of the covered cord in the tire width direction, such restraining force is received only from the tire width direction inside. Moreover, since the tread suppresses radial growth of the covered cord, circumferential direction deformation is concentrated at the tire circumferential direction end portion of the covered cord.

Accordingly, deformation is greater at the tire circumferential direction end portion of the covered cord than at other locations thereof. Using the reinforcing member to reinforce the tire circumferential direction end portion where this deformation is greater enables the tire circumferential direction end portion to be suppressed from separating from other locations of the covered cord.

In a pneumatic tire of a third aspect, an angle of inclination of the covered cord with respect to a tire circumferential direction is no greater than 2° at a tire equatorial plane.

In the pneumatic tire according to the third aspect, the angle of incline of the covered cord is closer to the circumferential direction than it would be in cases in which the angle of incline of the covered cord with respect to the tire circumferential direction were greater than 2°. This promotes a hoop function of the covered cord, enabling out-of-plane deformation of the tread to be suppressed.

### Advantageous Effects of Invention

In the pneumatic tire according to the present disclosure, the reinforcing member reinforces the belt layer while avoiding a step change in rigidity.

### BRIEF DESCRIPTION OF DRAWINGS

Fig. 1 is a cross-section illustrating half of a pneumatic tire according to an exemplary embodiment of the present disclosure, as sectioned along a tire width direction and a tire radial direction.
Fig. 2 is a perspective view illustrating configuration of a belt layer of a pneumatic tire according to an exemplary embodiment of the present disclosure.
Fig. 3A is a cross-section illustrating a belt layer of a pneumatic tire according to an exemplary embodiment of the present disclosure.
Fig. 3B is a cross-section illustrating a modified example in which two reinforcing cords are embedded in a single resin-covered cord of a pneumatic tire according to an exemplary embodiment of the present disclosure.
Fig. 4 is a cross-section illustrating half of a pneumatic tire according to a modified example of an exemplary embodiment of the present disclosure, in which a belt layer is formed of two layers.
Fig. 5 is an enlarged plan view illustrating part of a strap layer of a pneumatic tire according to an exemplary embodiment of the present disclosure.

### DESCRIPTION OF EMBODIMENTS

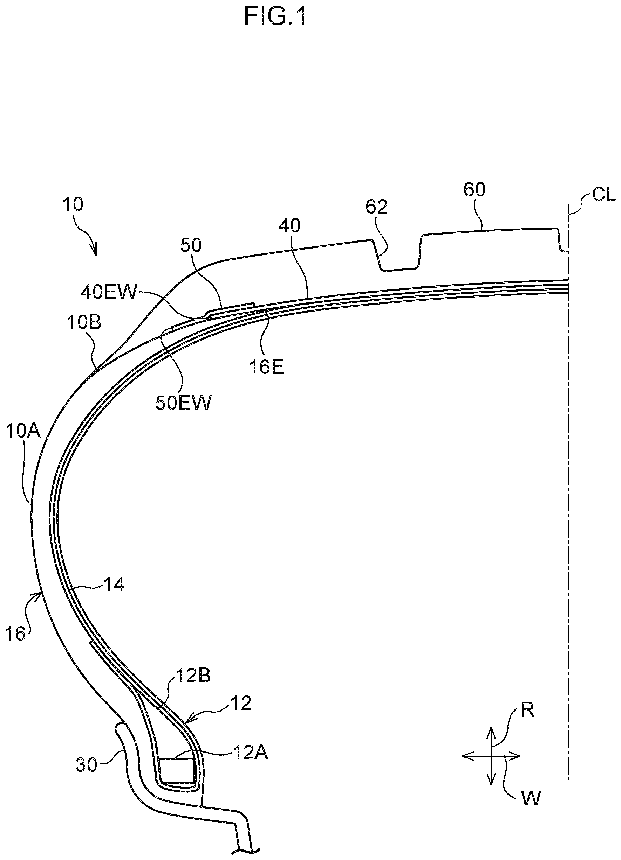

Fig. 1 is a cross-section illustrating one side of a pneumatic tire (referred to hereafter as a tire 10) according to an exemplary embodiment of the present disclosure, as sectioned along a tire width direction and a tire radial direction (namely a cross-section as viewed along a tire circumferential direction). In the drawings, the arrow W indicates a width direction of the tire 10 (tire width direction), and the arrow R indicates a radial direction of the tire 10 (tire radial direction). Note that the tire width direction refers to a direction running parallel to the rotation axis of the tire 10. The tire radial direction refers to a direction orthogonal to the rotation axis of the tire 10. The letters CL indicate an equatorial plane (tire equatorial plane) of the tire 10.

In the present exemplary embodiment, a tire radial direction side toward the rotation axis of the tire 10 is referred to as the tire radial direction inside, and a tire radial direction side further away from the rotation axis of the tire 10 is referred to as the tire radial direction outside. A tire width direction side toward the tire equatorial plane CL is referred to as the tire width direction inside, and a tire width direction side further away from the tire equatorial plane CL is referred to as the tire width direction outside.

### Tire

Fig. 1 illustrates the tire 10 when assembled to a rim 30 configured by a standard rim and inflated to a standard air pressure. The standard rim referred to here is a rim as specified in the 2017 edition of the Japan Automobile Tyre Manufacturers Association (JATMA) Year Book. Likewise, the standard air pressure is the air pressure corresponding to the maximum loading capacity as specified in the 2017 edition of the Japan Automobile Tyre Manufacturers Association (JATMA) Year Book.

As illustrated in Fig. 1, the tire 10 includes a pair of bead portions 12, a carcass 14 straddling between bead cores 12A embedded in the respective bead portions 12 and including end portions anchored to the respective bead cores 12A, bead fillers 12B embedded in the respective bead portions 12 so as to extend from the bead cores 12A toward the tire radial direction outside along an outer surface of the carcass 14, a belt layer 40 provided at the tire radial direction outside of the carcass 14, strap layers 50 laid at the tire radial direction outside of the belt layer 40 so as to straddle tire width direction end portions 40EW of the belt layer 40, and a tread 60 provided at the tire radial direction outside of the belt layer 40 and the strap layers 50. Note that only the bead portion 12 on one side is illustrated in Fig. 1.

### Bead Portions

The bead cores 12A are each configured from a wire bundle, and are embedded in the respective pair of bead portions 12. The carcass 14 straddles between the bead cores 12A. Various structures, for example structures with circular or polygonal shaped cross-section profiles, may be adopted for the bead cores 12A. A hexagonal shape may be adopted as an example of a polygonal shape; however, in the present exemplary embodiment a four-sided shape is employed.

In each of the bead portions 12, the bead filler 12B is embedded in a region enclosed by the carcass 14 anchored to the corresponding bead core 12A, and the bead filler 12B extends from the bead core 12A toward the tire radial direction outside.

### Carcass

The carcass 14 is a tire frame member formed by covering plural cords with covering rubber. The carcass 14 configures a tire frame extending in a toroid shape from one to the other of the bead cores 12A. End portion sides of the carcass 14 are anchored to the respective bead cores 12A. Specifically, the end portion sides of the carcass 14 are folded back on themselves from the tire width direction inside toward the tire width direction outside around the respective bead cores 12A, and are anchored thereto.

Note that the carcass 14 of the present exemplary embodiment is a radial carcass. There is no particular limitation to the material employed for the carcass 14, and Rayon, Nylon, polyethylene naphthalate (PEN), polyethylene terephthalate (PET), an aramid, glass fibers, carbon fibers, steel, or the like may be employed therefor. From the perspective of weight reduction, an organic fiber cord is preferable. Although a range of from 20 to 60 strands per 50 mm are incorporated in the carcass, there is no limitation to this range.

Side rubber 16 is provided at the tire width direction outsides of the carcass 14. Each side rubber 16 forms a side portion 10A of the tire 10 extending from the corresponding bead portion 12 toward the tire radial direction outside, and is bonded to the tread 60. The side rubber 16 is formed with gradually decreasing thickness at a shoulder portion 10B. An end portion 16E of each side rubber 16 is disposed at the tire radial direction inside of the belt layer 40, described later, and further toward the tire width direction inside than the corresponding tire width direction end portion 40EW of the belt layer 40.

Note that the end portion 16E of the side rubber 16 may be disposed further toward the outside than the corresponding tire width direction end portion 40EW of the belt layer 40. In such cases, the tire width direction end portion 40EW of the belt layer 40 would be disposed contacting an outer circumferential surface of the carcass 14 instead of contacting the side rubber 16. The end portion 16E of the side rubber 16 may also be disposed further toward the outside than a tire width direction end portion 50EW of the corresponding strap layer 50, described later. In such cases, the tire width direction end portion 50EW of the strap layer 50 would be disposed contacting the outer circumferential surface of the carcass 14 instead of contacting the side rubber 16.

### Belt Layer

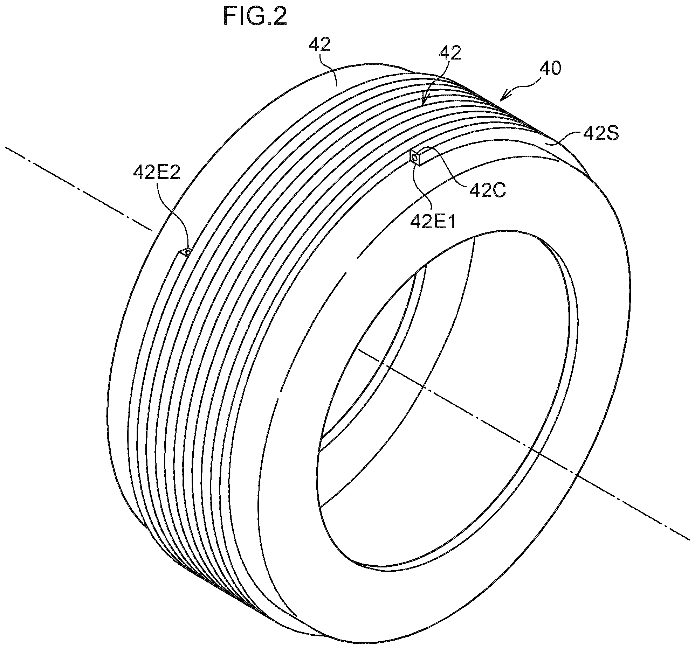

The belt layer 40 is laid at the tire radial direction outside of the carcass 14. As illustrated in Fig. 2, the belt layer 40 serves as a ring-shaped hoop, and is formed by winding a single resin-covered cord 42 in a spiral pattern in the tire circumferential direction around the outer circumferential surface of the carcass 14. Two end portions 42E1, 42E2 of the resin-covered cord 42 are disposed at different positions to each other with respect to the circumferential direction. Note that the spiral pattern referred to here indicates a state in which the single resin-covered cord 42 is wound around at least one full circuit of the periphery of the carcass 14.

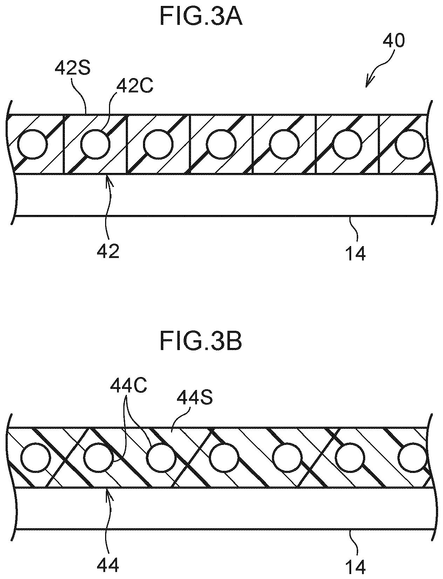

As illustrated in Fig. 3A, the resin-covered cord 42 is configured by covering a reinforcing cord 42C with a covering resin 42S, and has a substantially square shaped cross-section profile. The covering resin 42S is bonded to outer circumferential surfaces of the carcass 14 and the side rubber 16 disposed at the tire radial direction inside of the covering resin 42S using rubber or an adhesive.

Mutually adjacent locations of the covering resin 42S in the tire width direction are integrally bonded using thermal welding, an adhesive, or the like. The reinforcing cord 42C is thus formed into the belt layer 40 (resin-covered belt layer) covered with the covering resin 42S. As illustrated in Fig. 2, end faces of the reinforcing cord 42C are exposed at the end portions 42E1, 42E2 of the resin-covered cord 42. Note that the end portions 42E1, 42E2 of the resin-covered cord 42 are formed at substantially right angles with respect to the length direction of the resin-covered cord.

The resin material employed for the covering resin 42S is a thermoplastic resin. Note that exemplary embodiments of the present disclosure are not limited thereto, and for example a thermoplastic elastomer, a thermosetting resin, a general purpose resin such as a (meth)acrylic-based resin, an EVA resin, a vinyl chloride resin, a fluorine-based resin, or a silicone-based resin, or an engineering plastic (encompassing super engineering plastics) may be employed as this resin material. Note that these resin materials do not include vulcanized rubber.

Thermoplastic resins (including thermoplastic elastomers) are polymer compounds of materials that soften and flow with increased temperature, and that adopt a relatively hard and strong state when cooled. In the present specification, out of these, polymer compounds forming materials that soften and flow with increasing temperature, that adopt a relatively hard and strong state on cooling, and that have a rubber-like elasticity are considered to be thermoplastic elastomers. Polymer compounds forming materials that soften and flow with increasing temperature, that adopt a relatively hard and strong state on cooling, and do not have a rubber-like elasticity are considered to be non-elastomer thermoplastic resins, these being distinct from thermoplastic elastomers.

Examples of thermoplastic resins (thermoplastic elastomers included) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

Thermosetting resins are curable polymer compounds that form a 3 dimensional mesh structure with increasing temperature. Examples of thermosetting resins include phenolic resins, epoxy resins, melamine resins, and urea resins.

The reinforcing cord 42C of the belt layer 40 of the present exemplary embodiment is configured from steel cord. This steel cord has a main component of steel and may include a minor amount of various other substances, such as carbon, manganese, silicon, phosphorus, sulfur, copper, or chrome.

Note that exemplary embodiments of the present disclosure are not limited thereto, and instead of steel cord, monofilament cord, or cord in which plural filaments are twisted together may be employed as the reinforcing cord 42C of the belt layer 40. Organic fibers of an aramid or the like, or of carbon or the like, may also be employed. Various twisting structure designs may be adopted, and various cross-section structures, twisting pitches, twisting directions, and distances between adjacent filaments may be employed. Furthermore, cord in which filaments of different materials are twisted together may be employed, and there is no particular limitation to the cross-section structure thereof, for which various twisting structures, such as single twists, layered twists, compound twists, or the like may be adopted.

### Strap Layer

As illustrated in Fig. 1, the strap layers 50 are laid at the tire radial direction outside of the belt layer 40. The respective strap layers 50 are disposed at both one tire width direction side end portion and the other tire width direction side end portion of the belt layer 40. The strap layers 50 are reinforcing members (reinforcing layers) that reinforce the belt layer 40, and are disposed straddling the tire width direction end portions 40EW of the belt layer 40.

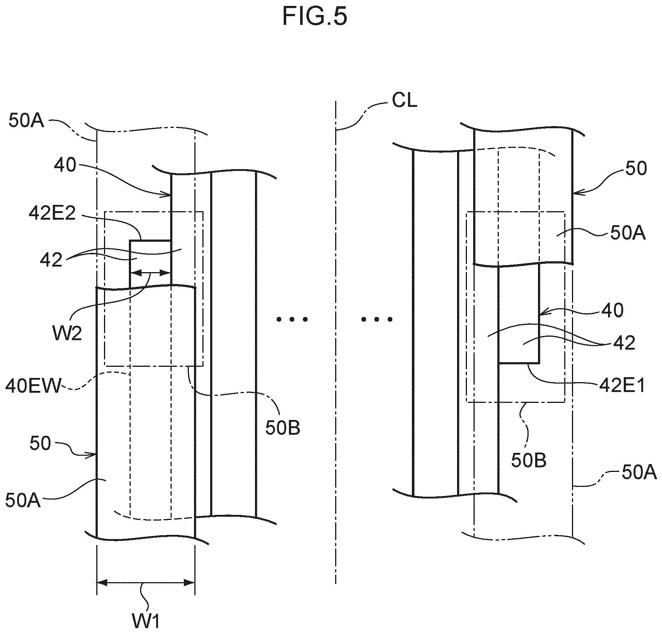

Each of the strap layers 50 is formed by winding a strap-shaped member (reinforcing member) 50A (see Fig. 5) of constant width and configured including plural fiber cords in a linear shape around the tire circumferential direction for slightly less than one full circuit (no greater than one full circuit). The belt-shaped member 50A is not formed with an overlapping portion where length direction end portions of the member 50A overlap each other. Namely, the strap layer 50 is no greater than one layer thick anywhere around the tire circumferential direction.

For example, organic fiber cord made of Nylon, polyester, or an aromatic polyamide may be employed as the fiber cords of the strap layers 50. Alternatively, steel cord may be employed therefor. Moreover, a known layer-forming material such as is generally employed in pneumatic tires may be employed therefor. Although the strap layers 50 of the present exemplary embodiment each include plural fiber cords, configuration may for example be made using a sheet shaped member configured from a single piece of a resin material or a single piece of rubber and not including fibers.

Note that the strap layers 50 preferably have a bending rigidity no higher than the bending rigidity of the belt layer 40, such that the strap layers 50 follow deformation of the tread. Moreover, the cords of the strap layers 50 are covered by rubber or a resin. A material that undergoes little thermal contraction (or thermal expansion) is preferably selected as this resin. Examples of materials that undergo little thermal contraction include crystalline resins such as EVA, PET, and PPS, and non-crystalline resins such as ABS, PS, AS, PC, PVC, and PMMA. The thermosetting resins mentioned above may also be employed therefor. Thermosetting resins undergo little thermal contraction after curing.

As illustrated in Fig. 5, a width W1 of the belt-shaped members 50A configuring the respective strap layers 50 is formed wider than a width W2 of the resin-covered cord 42 configuring the belt layer 40. Note that although length direction end portions of the belt-shaped members 50A are cut at right angles to the length direction of the belt-shaped members 50A, the length direction end portions of the belt-shaped members 50A may be cut obliquely with respect to the length direction of the belt-shaped members 50A.

The strap layer 50 on one tire width direction side covers the end portion 42E1 on one side of the resin-covered cord 42, and also covers part of the resin-covered cord 42 adjacent to the end portion 42E1 on the width direction inside. The strap layer 50 on the other tire width direction side covers the end portion 42E2 on the other side of the resin-covered cord 42, and also covers part of the resin-covered cord 42 adjacent to the end portion 42E2 on the width direction inside.

Note that the strap layers 50 may be formed with a greater width so as to cover the entirety of the resin-covered cord 42 disposed at the width direction insides of the end portions 42E1, 42E2.

### Tread

The tread 60 is provided at the tire radial direction outside of the belt layer 40 and the strap layers 50. The tread 60 is a location that makes ground contact with the road surface during travel, and a tread face of the tread 60 is formed with plural circumferential direction grooves 62 extending in the tire circumferential direction. The shapes and number of the circumferential direction grooves 62 are set as appropriate according to the water expelling properties, steering stability performance, and the like demanded of the tire 10.

### Operation

In the tire 10 according to the present exemplary embodiment, the reinforcing cord 42C is covered by the covering resin 42S, this being a thermoplastic resin, so as to form the belt layer 40. The belt layer 40 that is formed using a thermoplastic resin has higher ring rigidity than would, for example, a belt layer formed using rubber instead of a thermoplastic resin. This makes an annular surface of the tread 60 less liable to undergo out-of-plane deformation along the tire circumferential direction or the tire width direction, thereby suppressing deformation of the tire 10.

The belt layer 40 that is formed using a thermoplastic resin also has higher in-plane (within the plane of the annular surface extending in the tire circumferential direction and the tire width direction) shear rigidity than would a belt layer formed using rubber. This makes the tread 60 less liable to undergo in-plane deformation in response to shear force acting in the tire width direction, for example when turning during travel. This enables an intersecting belt layer to be omitted, thereby enabling a reduction in weight of the tire while raising steering stability during travel when internally pressurized.

Winding the resin-covered cord 42 around the tire circumferential direction in a spiral pattern raises the ring rigidity of the belt layer in comparison to cases in which a belt layer is formed by arranging plural covered cords alongside each other. This further suppresses out-of-plane deformation of the tread 60.

Moreover, the strap layers 50 are disposed at the tire width direction end portions of the belt layer 40. This thereby enables deformation of the tire width direction end portions of the belt layer 40 to be suppressed. The strap layers 50 are disposed straddling the tire width direction end portions 40EW of the belt layer 40. Accordingly, the strap layers 50 provide reinforcement at both the inside and outside (the tire width direction outside and inside) of the tire width direction end portions 40EW of the belt layer 40. The change in rigidity of the tire 10 on progression along the tire width direction is therefore smoother than it would be in cases in which, for example, the positions of the tire width direction ends of the strap layers 50 were aligned with the positions of the tire width direction end portions 40EW of the belt layer 40. A step change in rigidity is thus avoided.

Moreover, the strap layers 50 are no more than one layer thick around the entire tire circumferential direction, and are not formed with overlapping portions. This thereby enables the formation of tire circumferential direction locations of markedly higher rigidity to be suppressed. This enables the creation of a step change in rigidity on progression around the tire circumferential direction to be suppressed.

In the tire 10 according to the present exemplary embodiment, an angle of incline of the resin-covered cord 42 with respect to the tire circumferential direction is no greater than 2° at the tire equatorial plane. Accordingly, the angle of incline of the resin-covered cord 42 is closer to the circumferential direction than it would be in cases in which the angle of incline of the resin-covered cord 42 with respect to the tire circumferential direction were greater than 2°. This promotes the hoop function of the resin-covered cord 42, enabling out-of-plane deformation of the tread 60 to be suppressed. Moreover, creep of the covering resin 42S at high internal pressures can also be suppressed.

Note that the strap layers 50 that serve as reinforcing members in the present exemplary embodiment are formed by winding the respective belt-shaped members 50A in a linear shape for slightly over one full circuit (namely, at least one full circuit) around the tire circumferential direction. However, exemplary embodiments of the present disclosure are not limited thereto. For example, as in the case of a reinforcing member 50B illustrated by single-dotted dashed lines in Fig. 5, it is sufficient that a reinforcing member cover at least the tire circumferential direction end portions 42E1, 42E2 of the resin-covered cord 42. So doing enables efficient reinforcement of the belt layer 40.

When the tread 60 and the belt layer 40 are heated during tire manufacture or are subjected to pressure from the tire radial direction inside, the resin-covered cord 42 attempts to undergo linear expansion in the tire circumferential direction. When this occurs, since adjacent locations of the resin-covered cord 42 in the tire width direction are joined together, such expansion is restrained.

However, at the very outside of the resin-covered cord 42 in the tire width direction, such restraining force is received only from the tire width direction inside. Moreover, since the tread 60 suppresses radial growth (namely an increase in curvature) of the resin-covered cord 42, circumferential direction deformation is concentrated at the tire circumferential direction end portions 42E1, 42E2 of the resin-covered cord 42.

Accordingly, deformation is greater at the tire circumferential direction end portions of the resin-covered cord 42 than at other locations thereof. Using the reinforcing members 50B to reinforce the circumferential direction end portions 42E1, 42E2 where deformation is greater enables the circumferential direction end portions 42E1, 42E2 to be suppressed from separating from other locations of the resin-covered cord 42.

Moreover, although the belt layer is formed as a single layer in the present exemplary embodiment, exemplary embodiments of the present disclosure are not limited thereto, and the belt layer may be provided with two or more layers.

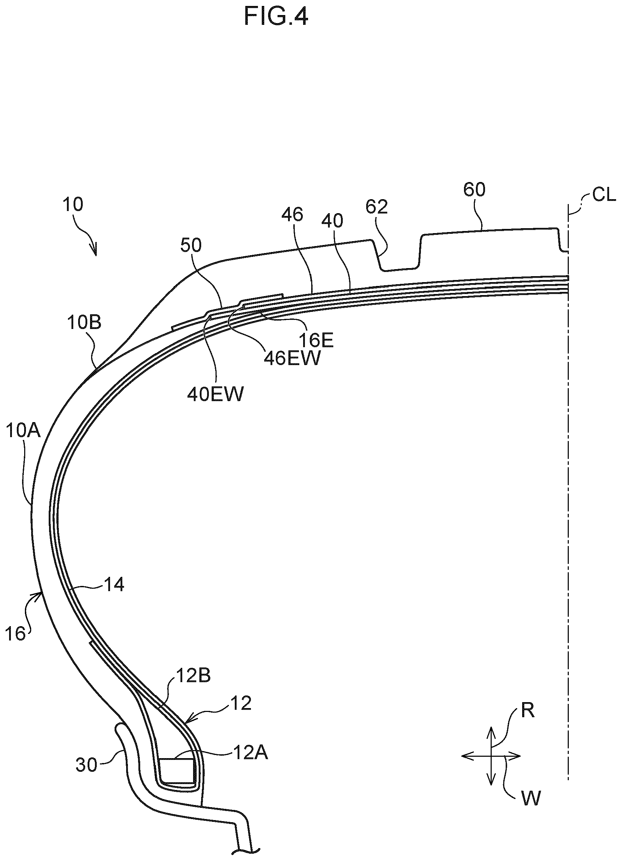

For example, as illustrated in Fig. 4, an intersecting belt layer 46 may be provided at the tire radial direction outside of the belt layer 40. Rubber or a resin may be employed as a material covering a reinforcing cord (not illustrated in the drawings) of the intersecting belt layer 46. Namely, in cases in which a belt layer is provided with plural layers, it is sufficient that resin be employed as the material covering a reinforcing cord in at least one of these layers.

Tire width direction end portions 46EW of the intersecting belt layer 46 are formed further toward the tire width direction inside than the tire width direction end portions 40EW of the belt layer 40. In cases such as this, in which a belt layer is provided with plural layers, the tire width direction end portions of the respective belt layers (belt layer 40 and intersecting belt layer 46) are preferably disposed at different positions to each other in order to smooth out the change in rigidity.

Even more preferably, the tire width direction end portions 46EW of a belt layer (intersecting belt layer 46) laid at the tire radial direction outside are disposed further toward the tire width direction inside than the tire width direction end portions 40EW of the belt layer (belt layer 40) disposed at the tire radial direction outside.

Moreover, the strap layers 50 are preferably disposed straddling both the tire width direction end portions 46EW of the intersecting belt layer 46 and the tire width direction end portions 40EW of the belt layer 40. So doing enables the creation of a step change in rigidity to be suppressed while providing reinforcement to both the intersecting belt layer 46 and the belt layer 40.

Although the belt layer 40 of the present exemplary embodiment is formed by winding the resin-covered cord 42, formed with a substantially square profile by covering the single reinforcing cord 42C with the covering resin 42S, around the outer circumferential surface of the carcass 14, exemplary embodiments of the present disclosure are not limited thereto.

For example, as illustrated in Fig. 3B, a resin-covered cord 44 formed with a substantially parallelogram shaped cross-section profile by covering plural reinforcing cords 44C with covering resin 44S may be wound around the outer circumferential surface of the carcass 14.

Moreover, if the resin-covered cord 42 is wound at least one or more full circuits around the periphery of the carcass 14 (namely wound in a spiral pattern), for example two or more of the resin-covered cords 42 may be employed instead of a single resin-covered cord 42. As can be seen from the above, various implementations of the present disclosure are possible.

The disclosure of Japanese Patent Application No. 2018-093002, filed on May 14, 2018, is incorporated in its entirety by reference herein. All cited documents, patent applications, and technical standards mentioned in the present specification are incorporated by reference in the present specification to the same extent as if each individual cited document, patent application, or technical standard was specifically and individually indicated to be incorporated by reference.

## Claims

1. A pneumatic tire comprising:
a pair of bead cores;
a carcass that is formed spanning the pair of bead cores;
a belt layer that is formed at a tire radial direction outside of the carcass by winding a covered cord, which is formed by covering a cord with a resin, in a spiral pattern; and
a reinforcing member that is disposed at a tire radial direction outside of the belt layer so as to straddle a tire width direction end portion of the belt layer.

2. The pneumatic tire of claim 1, wherein the reinforcing member covers at least a tire circumferential direction end portion of the covered cord.

3. The pneumatic tire of either claim 1 or claim 2, wherein an angle of inclination of the covered cord with respect to a tire circumferential direction is no greater than 2° at a tire equatorial plane.
